# EUROPEAN PATENT APPLICATION

(11) **EP 2 017 667 A2**
(43) Date of publication of application: **21.01.2009**
(21) Application number: 08103758.2
(22) Date of filing: 29.04.2008
(51) Int. Cl.: G03B 21/00, F21W 131/406

(54) **Stage projector structure**

(30) Priority: 23.05.2007 IT PS20070020
(71) Applicant: SGM Technology for Lighting s.p.a., 61010 Tavullia (PU) (IT)
(72) Inventor: Giorgi, Gabriele, 61010 Gabicce Mare (PU) (IT)
(74) Representative: Gustorf, Gerhard

(57) **Abstract**

Projector structure, particularly for stage use, comprising an interchangeable module (16) for managing the light projection suitable for replacing a "Gobo" device with a digital micromirror device (DMD) (12) comprised of a refraction (5, 6, 10, 11) and/or reflection (8) means system for circulation of the light beam (R) around the digital micromirror device (12) maintaining the coaxiality between the light source (2, 3) and projection lenses (13, 14, 15).

## Description

### DETAILED DESCRIPTION

### Field of the invention

Projectors, especially for stage use, are normally provided with mechanical devices for manipulating the generated light beam, called "Gobo", an acronym of "goes before optics", comprised of perforated masks arranged between the light source and, the projection lenses, suitable for creating patterns with the projected light, partly screening it;
such devices usually comprise a plurality of such masks, usually of discoid shape, automatically interchangeable, in order to impart to the projector the possibility of creating a plurality of patterns.

On the other hand, the electronic light beam manipulation technology called "DMD", an acronym of "Digital Micromirror Device", is known, comprising a surface comprised of a plurality of reflecting elements of infinitesimal dimensions, each autonomously rotating on the strength of the electrostatic attraction produced by the differences in tension developed between the single micromirror and the respective underlying memory cell, so that each of them can reflect the light in two directions, so that by selectively rotating a part of the plurality of mirrors that make up the device as a whole, appropriately defined by location and number, the most varied effects of pattern and chromaticity.

Projector applications are already known among the numerous uses of such digital micromirror devices but to date, they are no so satisfactory as regards stage projectors, since the relevant geometries of light beam management impose shapes that are not suited for those of projectors for stage use and for the relevant needs of quick variation of orientability of the light beam.

### Objects of the invention

The main object of the present finding therefore is, within the scope provided above, to provide a geometry of application of digital micromirror devices to projectors for stage use such as to make it suitable for the usual shapes of such projectors and for the relevant requirements of quick directional movement of the light beam.

Another object of the present finding is to achieve the above object by a solution compatible with the relevant interchangeability with "Gobo" devices according to the prior art.

Yet a further object of the present finding is to achieve the above objects through a simple and effective solution, with safe operation and at a relatively low cost in consideration of the results achieved thereby in the practice.

### Summary of the invention

These and yet other objects are all achieved with the projector structure, particularly for stage use, according to the present invention, comprising an interchangeable module (16) for managing the light projection suitable for replacing a "Gobo" device with a digital micromirror device (DMD) (12) comprised of a refraction (5, 6, 10, 11) and/or reflection (8) means system for circulation of the light beam (R) around the digital micromirror device (12) maintaining the coaxiality between the light source (2, 3) and projection lenses (13, 14, 15).

### Brief description of the drawings

Further features and advantages of the projector according to the present invention, will appear more clearly from the following detailed description of a preferred but non-exclusive embodiment thereof, illustrated by way of a non-limiting example in the annexed three drawings, wherein:
Figure 1 shows a schematic view of a projector structure according to the present invention with illustration of a light beam in a direction of reflection of the digital micromirror device it is provided with;
Figure 2 shows the same view as figure 1 with illustration of the light beam in the other direction of reflection of the digital micromirror device;
Figure 3 shows a schematic view of an insulated module of digital micromirror device equipping the projector structure according to the present invention.

### Description of the preferred embodiment

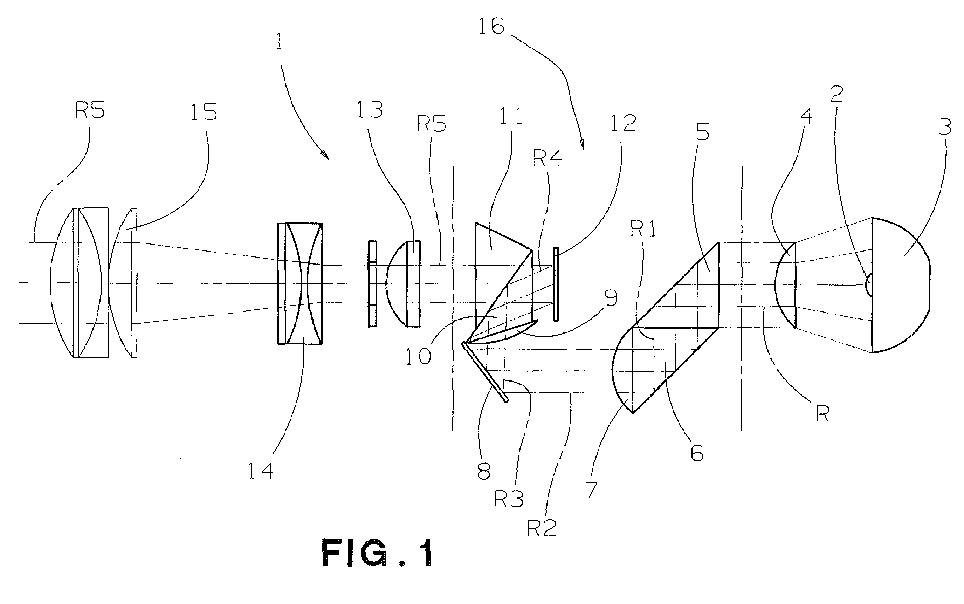

With reference to such figures, and in particular to figure 1, reference numeral 1 globally indicates a schematically illustrated structure of stage projector according to the present finding, comprising a light source 2 consisting of a discharge lamp, within a parabola reflector 3, which emits a bundle of light beams R, focused on a first lens 4.

Downstream of the first lens 4 the following is therefore provided in a sequence: a first optical prism 5 and a second optical prism 6 twinned and facing in a pair; a second lens 7; a conventional inclined mirror 8; a third lens 9; a third optical prism 10 and a fourth optical prism 11 twinned and facing in pairs; a digital micromirror device 12, to be understood as connected to an appropriate electronic processor served by suitable *software,* and a series of usual projection lenses 13, 14 and 15.

Such elements are positioned and oriented so that beyond the first lens 4, the light beam R undergoes a circulation relative to the emission axis, in particular it undergoes:
through the first optical prism 5 a first deviation by refraction R1 on an axis substantially perpendicular to the emission axis R;
through the second optical prism 6 a second deviation by refraction R2 on an axis substantially parallel to the emission axis R;
in abutment against the inclined mirror 8 a third deviation by reflection R3 on an axis substantially perpendicular to the emission axis R;
through the third optical prism 10a fourth deviation by refraction R4 on an axis substantially coaxial to the emission axis R, against the digital micromirror device 12, which is thus oriented with reflecting surface backing the light source 2, coaxially thereto.

The bundle of light beams R5 reflected by the digital micromirror device 12, in the normal orientation thereof, is thus coaxial to the emission axis of the light beam R of the light source 2, and through the fourth optical prism 11 and the optics 13, 14 and 15 it undergoes a projection to the exterior, without any further deviation, for the projector's own functions.

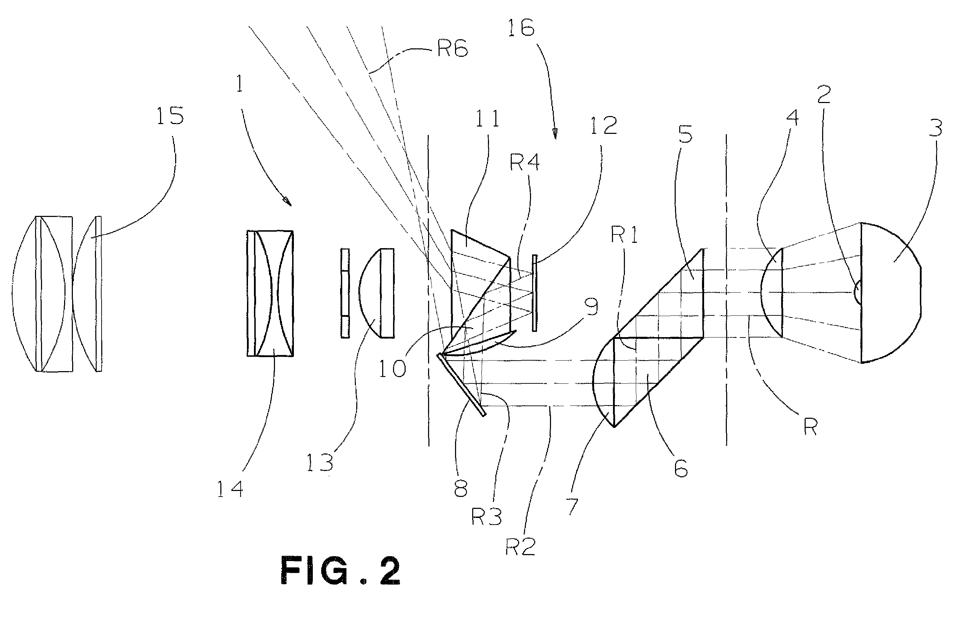

By electronically intervening in a known manner, through an electronic processor not shown provided with appropriate *software,* on the digital micromirror device 12, all or part thereof can be oriented, so that all or part of the reflected light beam, crossing the fourth prism 11, is refracted directing it towards opaque surfaces (see figure 2) and in any case outside optics 13, 14 and 15, thus without undergoing a projection to the exterior.

By selectively rotating a part of the plurality of mirrors that make up the digital micromirror device 12 as a whole, appropriately defined by location, number and colour, a portion of the light beam can be conveyed outwards and a portion opacified, thus achieving the most varied effects of pattern and chromaticity of the bundle of light beams R5 projected outwards.

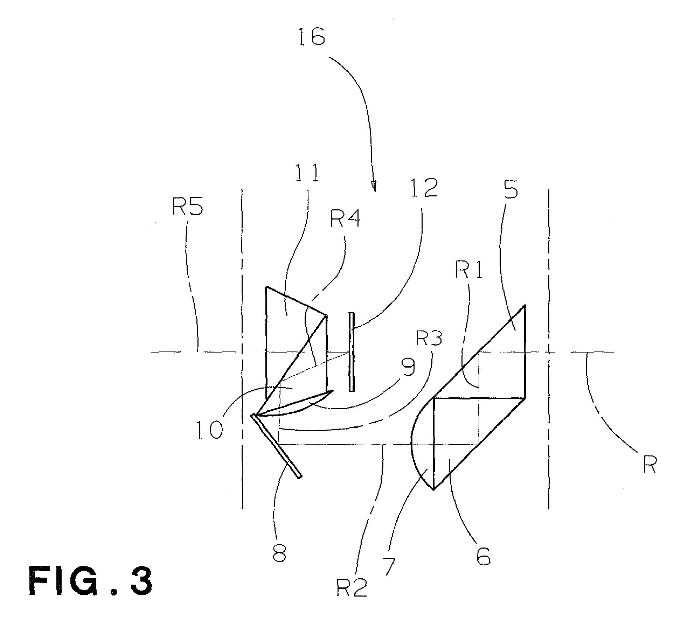

The circulation unit of the light beam and the digital micromirror device 12 are designed as insulating as illustrated in figure 3, it being possible to create a module therewith globally indicated with reference numeral 16 (see figure 3), removable and interchangeable in relation to a "Gobo" device of known type, appropriately supported by similar means for the relevant placement on directrix R of the light beam without any circulations and for a conventional use of the projector.

Such circulation device 16 of the light beam R around the digital micromirror device 12 maintaining the coaxiality between the light source 2 and the projection lenses 13, 14, 15 allows the adoption of a light source 2 (which, as already said in the introduction consists of a discharge lamp) with increased discharge arc, that is, greater distance between the electrodes.

In fact, the lamps with discharge arc of usual dimensions, that is, reduced distance between the electrodes, are not functional for the projectors for stage use, since they do not withstand the sudden movements often imposed by such devices, for their functions of variation of orientation of the light beam on quickly moving subjects or the like.

The lamps with discharge arc of increased dimensions, on the contrary, are better suited for such strains and the circulation device according to the present finding in turn is suitable for the above lamps with discharge arc of increased dimensions.

### Alternative embodiments

It is clear the in further alternative embodiments still falling within the solution concept implied in the embodiment illustrated above and claimed below, the projector structure according to the present invention can be embodied with technical and mechanical equivalents, that is, provided with further integrative devices, as well as all the shapes of the relative components may be changed suitably for the purpose.

In particular, the circulation system of the light beam around the digital micromirror device so as to make it incise thereon and reflect therefrom coaxially to the emission beam of the light source, turning the back to such source, can alternately be achieved with optical means of any other kind and appropriate type, that is, structured, shaped and positioned in any other different manner suitable for the purpose.

### Advantages of the invention

As is clear from the above detailed description of a preferred embodiment and from the above mention to some embodiment versions, the projector structure according to the invention offers the advantages corresponding to the attainment of the intended purposes as well as others: in fact, it represents a functional, multipurpose and inexpensive solution concept suitable for allowing the application of the advantageous technology of digital micromirror devices to the known structures of stage projectors, while realising the possibility of setting up conventional projectors suitable for the digital technique, with advantages of modularity both for the manufacturer and for the operators, as well as standardisation of the components, except for the parts strictly required to change the traditional technology into the digital technology.

## Claims

1. Projector structure, particularly for stage use, **characterised in that** it comprises a digital micromirror device (DMD) (12) module (16) for managing the light projection comprised of a refraction (5, 6, 10, 11) and/or reflection (8) means system for circulation of the light beam (R) around said digital micromirror device (12) maintaining the coaxiality between the light source (2, 3) and projection lenses (13, 14, 15).

2. Projector structure according to the previous claim, **characterised in that** it comprises an interchangeable module (16) for managing the light projection suitable for replacing a "Gobo" device with a digital micromirror device (DMD) (12) comprised of a refraction (5, 6, 10, 11) and/or reflection (8) means system for circulation of the light beam (R) around the digital micromirror device (12) maintaining the coaxiality between the light source (2, 3) and projection lenses (13, 14, 15).

3. Projector structure according to the previous claims, **characterised in that** it comprises an interchangeable module (16) for managing the light projection suitable for replacing a "Gobo" device with a digital micromirror device (DMD) (12) comprised of a prism (5, 6, 10, 11) and mirror (8) system for circulation of the light beam (R) around the digital micromirror device (12) to maintain the coaxiality between the light source (2, 3) and projection lenses (13, 14, 15).

4. Projector structure according to the previous claims and each of them, **characterised in that** said circulation system of the light beam (R) relative to the axis of the light source (2, 3) comprises a first deviation (R1) on a substantially perpendicular axis, a second deviation (R2) on a substantially parallel axis, a third deviation (R3) on a substantially perpendicular axis, a fourth deviation (R4) substantially on the same axis (R) of said light source (2, 3) against said digital micromirror device (12).

5. Projector structure according to the previous claims and each of them, **characterised in that** the axis of the light beam (R5) of reflection outwards said digital micromirror device (12) is coaxial to the axis of the light beam (R) of said light source (2, 3).

6. Projector structure according to the previous claims and each of them, **characterised in that** said digital micromirror device (12) exhibits reflecting surfaces oriented on a front opposite that of origin of the light beam (R) of said light source (2, 3).

7. Projector structure according to the previous claims and each of them, **characterised in that** it comprises, in a sequence, a light source (2) within a parabola reflector (3), a first lens (4), a first optical prism (5) and a second optical prism (6) twinned and facing in a pair; a second lens (7); a conventional inclined mirror (8); a third lens (9); a third optical prism (10) and a fourth optical prism (11) twinned and facing in pairs; a digital micromirror device (12), connected to an appropriate electronic processor served by suitable *software*; and a series of projection lenses (13, 14, 15).

8. Projector structure according to the previous claim, **characterised in that** said light beam (R) of said light source (2, 3) undergoes:
- through said first optical prism (5) a first deviation by refraction (R1) on an axis substantially perpendicular to the emission axis (R);
- through said second optical prism (6) a second deviation by refraction (R2) on an axis substantially parallel to the emission axis (R);
- in abutment against said inclined mirror (8) a third deviation by reflection (R3) on an axis substantially perpendicular to the emission axis (R);
- through said third optical prism (10) a fourth deviation by refraction (R4) on an axis substantially coaxial to the emission axis (R), against the digital micromirror device (12).

9. Projector structure according to the previous claim, **characterised in that** said bundle of light beams (R5) reflected by said digital micromirror device (12) in the normal orientation thereof is coaxial to the emission axis of the light beam (R) of said light source (2) and through said fourth optical prism (11) and said optics (13, 14, and 15) it undergoes a projection to the exterior.

10. Projector structure according to the previous claim, **characterised in that** said bundle of light beams reflected by said digital micromirror device (12) in the inclined orientation thereof is dispersed through said fourth optical prism (11) towards opaque areas of the structure.

11. Projector structure according to the previous claim, **characterised in that** the circulation unit of the light beam (R) and the digital micromirror device (12) are designed insulated in a module (16) removable and interchangeable in relation to a "Gobo" device of known type.

12. Projector structure according to the previous claims and each of them, **characterised in that** said light source (2) within a parabola reflector (3) is comprised of a discharge lamp with increased discharge arc, that is, greater distance between the electrodes.
